# EUROPÄISCHE PATENTSCHRIFT

(11) **EP 3 223 742 B1**
(45) Veröffentlichungstag und Bekanntmachung des Hinweises auf die Patenterteilung: **04.12.2019**
(21) Anmeldenummer: 15798115.0
(22) Anmeldetag: 23.11.2015
(51) Int. Cl.: A61C 13/10, A61C 13/00, A61C 13/36, A61C 13/01, A61C 13/34

(54) **HERSTELLUNG EINER DENTALPROTHESE DURCH AUFDRUCKEN DER PROTHESENBASIS AUF DIE PROTHESENZÄHNE**
PRODUCING A DENTAL PROSTHESIS BY PRINTING THE PROSTHESIS BASE ONTO THE PROSTHETIC TEETH
FABRICATION D'UNE PROTHÈSE DENTAIRE PAR IMPRESSION DE LA BASE PROTHÉTIQUE SUR LES DENTS PROTHÉTIQUES

(30) Priorität: 25.11.2014 DE 102014117222
(43) Veröffentlichungstag der Anmeldung: 04.10.2017
(73) Patentinhaber: Kulzer GmbH, 63450 Hanau (DE)
(72) Erfinder: RUPPERT, Klaus, 63477 Maintal (DE); BRILL, Stefan, 63751 Gelnhausen (DE)
(74) Vertreter: Schultheiss & Sterzel Patentanwälte PartG mbB
(86) Internationale Anmeldenummer: PCT/EP2015/077348
(87) Internationale Veröffentlichungsnummer: WO 2016/083296

(56) Entgegenhaltungen:
- WO-A1-2013/156572
- WO-A2-2011/034781
- DE-A1- 3 910 393
- DE-A1- 4 025 728
- US-A1- 2002 127 345
- US-A1- 2014 131 908
- US-A1- 2014 167 300

## Beschreibung

Die Erfindung betrifft ein Verfahren zur Herstellung einer Dentalprothese, wobei die Dentalprothese eine Prothesenbasis und mehrere Prothesenzähne aufweist und wobei das Verfahren unter Anwendung eines virtuellen dreidimensionalen Dentalprothesen-Modells der zu erzeugenden Dentalprothese erfolgt. Die Erfindung betrifft auch eine Dentalprothese hergestellt mit einem solchen Verfahren, eine Vorrichtung oder Kombination von Vorrichtungen zum Durchführen eines solchen Verfahrens und eine Okklusionsplatte hergestellt mit einem CAD/CAM-Verfahren zur Umsetzung eines solchen Verfahrens.

Der gängige Weg ist die analoge Erstellung von Dentalprothesen. Zur Herstellung der Prothesenbasis wird dazu derzeit meist ein analoges Verfahren verwendet, bei dem zunächst ein Abdruck des zahnlosen Kiefers des Patienten genommen wird. Aus diesem Abdruck wird ein Gipsmodell der Patientensituation gefertigt. Anschließend wird ein Funktionsmodell der Prothese aus Wachs auf dem Gipsmodell aufgebaut und mit Prothesenzähnen bestückt. Dann wird eine Hohlform oder Gießform aus diesen beiden Teilen aufgebaut, in der die Prothesenzähne bereits integriert sind. Dadurch sind die Prothesenzähne bereits in die Hohlform eingesetzt. Die Form wird mit einem zahnfleischfarbenen Kunststoff ausgegossen und während des Gießprozesses werden die Prothesenzähne mit der Prothesenbasis verbunden. Nach Aushärtung des Kunststoffs wird dieser nachbearbeitet, um die gewünschte Form zu erhalten.

Zur Herstellung der Dentalprothese werden Prothesenzähne manuell und einzeln auf einer Wachsbasis auf einem Gipsmodell des unbezahnten Kiefers aufgestellt. Diese Wachsprothese wird im nächsten Schritt in einer Küvette mit Gips, Silikon oder Gel (je nach späterer Verarbeitungstechnik) eingebettet, um dann nach Aushärten des Einbettmaterials die Wachsbasis mit heißem Wasser herauszuwaschen und einen Hohlraum für den Prothesenkunststoff zu schaffen. Die Prothesenzähne verbleiben dabei im Einbettmaterial. Ein entsprechender Kunststoff wird in den Hohlraum injiziert oder gegossen, dadurch erhält man nach Aushärtung des Kunststoffs die Dentalprothese. Bei der Aufstellung der konfektionierten Zähne werden diese der jeweiligen Mundsituation des Patienten vom Zahntechniker und gegebenenfalls auch vom Zahnarzt angepasst und beschliffen.

Neben handwerklichen Techniken gewinnen digitale Fertigungsmethoden im Dentalbereich immer mehr an Bedeutung. Zahnersatz, wie zum Beispiel Kronen und Brücken, wird seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion).

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Ferner gewinnen generative CAM-Verfahren wie SLM (Selective Laser Melting) zur Herstellung von Kronen, Brücken und Modellen sowie Stereolithographie und DLP (Digital light processing) für Dentalprodukte auf Polymerbasis wie zum Beispiel Provisorien, Prothesen, KFO-Apparaturen (Kiefer-Orthopädie-Apparaturen), Aufbissschienen, Bohrschablonen oder Dentalmodellen immer mehr an Bedeutung. Dabei ist die Herstellung von Zahnersatz auf Acrylatbasis mittels RP-Verfahren (Rapid-Prototyping-Verfahren) bisher immer noch starken Einschränkungen unterworfen. Mehrfarbiger Zahnersatz oder Zahnersatz aus verschiedenen PolymerMaterialien (zum Beispiel für Schmelz- und Dentinmassen) zur Herstellung von hochwertigem und ästhetischem Zahnersatz ist bisher nur mittels aufwendiger RP-Maschinen mit mehreren Materialkammern oder mittels aufwendiger Klebe- und Fügetechniken herstellbar.

Ebenso ist die Herstellung von Materialkombinationen (zum Beispiel CoCr und Polymer) mittels RP-Verfahren bisher sehr aufwendig und nicht in Serienreife umgesetzt. Die generative Herstellung von ästhetisch anspruchsvollen Konfektionszähnen für Teil- oder Totalprothesen ist derzeit nicht möglich, da mittels Stereolithographie nur ein Material beziehungsweise eine Farbe gedruckt werden kann. Das Drucken von mehrfarbigen Konfektionszähnen ist derzeit nicht möglich. Aus diesem Grund wird die Prothesenbasis mittels CAM-Verfahren (Fräsen oder Drucken) hergestellt und vorkonfektionierte Prothesenzähne werden mit der Prothesenbasis verklebt.

Die DE 10 2012 007 706 A1 offenbart die Verwendung einer Negativform zur Fixierung von Prothesenzähnen. Aus der DE 10 2006 017 651 A1 ist ein Aufbau einer Dentalprothese auf einem Modell eines Patientenkiefers bekannt. Es gibt bereits erste Verfahren, wie beispielsweise die aus der DE 10 2009 056 752 A1 oder der WO 2013 124 452 A1 bekannten Verfahren, bei denen eine dentale Teilbeziehungsweise Totalprothese digital aufgestellt und über CAD/CAM-Verfahren produziert wird. Aus der DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die US2014/0167300 offenbart ein Verfahren zum 3D-Drucken von künstlichen Zähnen und Prothesenbasis.

Solche Verfahren haben den Nachteil, dass die Prothesenzähne okklusal bearbeitet oder entnommen werden müssen, wobei anschließend die Prothesenbasis beschliffen wird, oder die Prothesenzähne basal beschliffen werden, um deren Position und Lage anzupassen. In den meisten Fällen müssen die vorkonfektionierten Prothesenzähne, die die besten ästhetischen Ergebnisse liefern, vor dem Verkleben basal eingekürzt werden, um die Bisshöhe (die Okklusion) der Dentalprothese einzustellen, so dass sich die Notwendigkeit ergibt, hierzu ein rationelles und kostengünstiges Verfahren anzugeben.

Aus der EP 2 571 451 B1 und der EP 2 666 438 A2 sind Verfahren bekannt, bei denen Prothesenzähne in einer Halterung in ein Wachs eingebettet werden und anschließend basal abgefräst werden. Die abgefrästen Zähne werden von dem Wachs befreit und anschließend in eine Prothesenbasis eingesetzt und dort verklebt, um eine Dentalprothese herzustellen.

Diese Verfahren haben den Nachteil, dass die Prothesenzähne einzeln oder in Gruppen bearbeitet und einzeln in die Prothesenbasis eingesetzt und verklebt werden müssen. Der richtige Ort zum Einsetzen der Prothesenzähne in die Prothesenbasis muss dabei gegebenenfalls durch Ausprobieren gefunden werden. Durch das Verkleben der Prothesenzähne in der Prothesenbasis entsteht ein erheblicher Arbeitsaufwand. Zudem werden die Verfahren meist derart durchgeführt, dass der Klebstoff beziehungsweise das Verbindungsmittel aus den Aufnahmeflächen zwischen den Prothesenzähnen und der Prothesenbasis austritt und anschließend wieder entfernt werden muss, um eine ästhetische Beeinträchtigung der Dentalprothese zu verhindern und um eine glatte Oberfläche zur Vermeidung von unerwünschten Anlagerungen zu erzielen. Bei einer Verklebung besteht zudem immer die Möglichkeit, dass das Klebemittel nicht gleichmäßig beziehungsweise nicht reproduzierbar aufträgt und dadurch die Höhe der Prothesenzähne beziehungsweise die Okklusion der Dentalprothese nachteilig beeinflusst wird. Im Extremfall muss dann eine koronale Nachbearbeitung der Prothesenzähne erfolgen.

Bei einem manuellen Einkürzen der vorkonfektionierten Prothesenzähne ergibt sich außerdem das Problem, dass die basale Seite (der Cervikal-Bereich) der zu erzeugenden Prothesenzähne eine individuelle Geometrie aufweist und vor dem Fräsen oder Drucken der Prothesenbasis diese Geometrie entsprechend eingescannt und das passende Gegenstück für die Basisplatte konstruiert werden müsste. Auch hierdurch entsteht ein Mehraufwand.

Die Aufgabe der Erfindung besteht also darin, die Nachteile des Stands der Technik zu überwinden. Insbesondere soll ein Verfahren bereitgestellt werden, bei dem eine einfache und schnell durchzuführende Herstellung der Dentalprothese reproduzierbar und in hoher Qualität durchführbar ist. Es soll wenn möglich eine Verklebung der Prothesenzähne in der Prothesenbasis vermieden werden. Ferner sollen moderne computergesteuerte Verfahren einsetzbar und vorhandene Daten und Techniken möglichst weitreichend nutzbar sein. Zudem soll eine möglichst einfache, vollständige und kostengünstige Bearbeitung der vorkonfektionierten Prothesenzähne und damit der Dentalprothese möglich sein.

Die Aufgaben der Erfindung werden gelöst durch ein Verfahren zur Herstellung einer Dentalprothese mit Hilfe eines Computers, wobei die Dentalprothese eine Prothesenbasis und mehrere Prothesenzähne aufweist, wobei das Verfahren unter Anwendung eines virtuellen dreidimensionalen Dentalprothesen-Modells der zu erzeugenden Dentalprothese erfolgt und wobei das virtuelle dreidimensionale Dentalprothesen-Modell virtuelle Prothesenzähne und eine virtuelle Prothesenbasis aufweist, mit den folgenden chronologischen Schritten:
A) Herstellen einer physischen Okklusionsplatte, wobei ein Bereich der Oberfläche der Okklusionsplatte durch ein Negativ der koronalen Seiten der virtuellen Prothesenzähne des virtuellen Dentalprothesen-Modells gebildet wird, wobei die Lage und die Orientierung der virtuellen Prothesenzähne relativ zueinander entsprechend dem virtuellen Dentalprothesen-Modell in der Form der Oberfläche der Okklusionsplatte erhalten bleibt;
B) Anlegen und Befestigen von vorkonfektionierten Prothesenzähnen an der Okklusionsplatte, wobei die koronalen Seiten der vorkonfektionierten Prothesenzähne an die durch das Negativ geformte Oberfläche der Okklusionsplatte angelegt werden;
C) Befestigen der Okklusionsplatte mit den darin befestigten Prothesenzähnen in eine Vorrichtung zum schichtweisen Aufbau von dreidimensionalen Kunststoffstrukturen; und
D) Aufdrucken der Prothesenbasis auf die basalen Enden der Prothesenzähne mit der Vorrichtung zum schichtweisen Aufbau von dreidimensionalen Kunststoffstrukturen auf der Basis der Form der virtuellen Prothesenbasis.

Die Bezeichnung "koronal" (lat. corona 'Krone') bedeutet an der Zahnkrone und zur Zahnkrone hin als Lage- und Richtungsbezeichnung an den Zähnen, umfassend die okklusale Oberfläche und die die okklusale Oberfläche umgebenden Umfangsbereiche der Zähne. Die Bezeichnung "basal" bedeutet an der Zahnwurzel und zur Zahnwurzel hin als Lage- und Richtungsbezeichnung an den Zähnen. Diese Bezeichnungen werden auch für Prothesenzähne angewendet.

Das Befestigen kann besonders bevorzugt über eine mechanische Spannung auf die Prothesenzähne erfolgen. Hierzu können die Aufnahmeflächen in der Okklusionsplatte etwas kleiner, bevorzugt um bis zu 10% kleiner bezogen auf die Gesamtfläche sein, als die koronale Form der Prothesenzähne, um durch die elastische Verformung der Aufnahmeflächen in der Okklusionsplatte eine elastische Kraft auf die Prothesenzähne zu bewirken, die die Prothesenzähne in Position hält. Alternativ wäre auch ein Einkleben oder ein Anhaften mit Wachs möglich.

Als Vorrichtung zum schichtweisen Aufbau von dreidimensionalen Kunststoffstrukturen kann bevorzugt ein 3D-Drucker verwendet werden. Andere generative Verfahren wie beispielsweise selektives Laserschmelzen können ebenfalls eingesetzt werden.

Bei erfindungsgemäßen Verfahren kann vorgesehen sein, dass nach Schritt B) und vor Schritt D) ein basales Abtragen der an der Okklusionsplatte befestigten vorkonfektionierten Prothesenzähne erfolgt, wobei die Prothesenzähne durch das basale Abtragen an die Form der virtuellen Prothesenzähne und/oder der virtuellen Prothesenbasis angepasst werden.

Das basale Abtragen der vorkonfektionierten Prothesenzähne erfolgt erfindungsgemäß bevorzugt durch Abfräsen der vorkonfektionierten Prothesenzähne. Dabei wird besonders bevorzugt eine computergesteuerte CAM-Fräse, wie beispielsweise eine computergesteuerte 4-Achs- oder 5-Achs-Fräse, verwendet.

Auf die basale Seite der Prothesenzähne, die der koronalen Seite der Prothesenzähne gegenüberliegt und die aufgrund des basalen Abtragens der Prothesenzähne an die geplante äußere Form von Aufnahmeflächen der virtuellen Prothesenbasis angepasst ist, kann anschließend problemlos die Prothesenbasis mit der Vorrichtung zum schichtweisen Aufbau von dreidimensionalen Kunststoffstrukturen aufgebaut werden, beispielsweise mittels eines 3D-Druckers aufgedruckt werden.

Mit einer Weiterentwicklung der vorliegenden Erfindung wird vorgeschlagen, dass die vorkonfektionierten Prothesenzähne basal so eingekürzt werden, dass die Basalflächen aller Prothesenzähne in einer Ebene oder im Wesentlichen in einer Ebene liegen.

Hierdurch wird ein nachfolgendes Aufdrucken der Prothesenbasis auf die basalen Enden der Prothesenzähne erleichtert, da die gemeinsame Ebene besonders leicht in einem Harzbad ausgehärtet werden kann, beziehungsweise der Aufbau mit der Vorrichtung zum schichtweisen Aufbau von dreidimensionalen Kunststoffstrukturen, beziehungsweise der 3D-Druck auf einer großen gemeinsamen Fläche einfacher durchzuführen ist und die erhaltene Dental-Prothese stabiler wird. Hierzu ist es wichtig, dass die virtuellen Modelle der Prothesenzähne und/oder der Prothesenbasis an diese äußere Form angepasst werden. Bei dem virtuellen Modell der Prothesenzähne und der Prothesenbasis wird dann eine Verbindungsfläche der basalen Endflächen der Prothesenzähne in einer Ebene vorgesehen. Wenn die virtuellen Modelle der Prothesenzähne und der Prothesenbasis durch File-Splitting des Dentalprothesen-Modells gewonnen werden, wird die zur Trennung vorgesehene Fläche der Prothesenzähne entsprechend dieser Ebene gewählt. Seitlich können um den Zahnhals der Prothesenzähne weitere Verbindungsflächen mit der Prothesenbasis vorgesehen sein, so dass die Prothesenzähne in der Prothesenbasis eingebettet werden und nicht nur über die Basalflächen mit der Prothesenbasis verbunden werden. Bevorzugt liegen die Basalflächen aller Prothesenzähne in einer Ebene parallel zur Okklusionsplatte oder zur Okklusionsebene oder zur Transversalebene bezogen auf den Patienten.

Bevorzugt wird die Prothesenbasis derart auf die Prothesenzähne schichtweise aufgetragen, dass die Prothesenzähne nicht nur auf der basalen Unterseite sondern auch axial rundherum eingeschlossen sind, so können beispielsweise interdentale Zwischenräume bereichsweise gefüllt werden. Hierdurch wird die Stabilität der Dentalprothese verbessert.

Ferner kann vorgesehen sein, dass die basal eingekürzten Prothesenzähne aus der Okklusionsplatte entfernt und von Rückständen befreit werden, bevorzugt von einem Haltemittel zur Halterung der Prothesenzähne in der Okklusionsplatte gereinigt werden, besonders bevorzugt von einem Wachs oder von einem Fräswachs gereinigt werden, wobei die Prothesenzähne vor Schritt C) wieder in der Okklusionsplatte befestigt werden.

Das Wachs, Fräswachs oder das Haltemittel zur Verbindung der Prothesenzähne mit der Okklusionsplatte wird dabei bevorzugt ausgeschmolzen und die Prothesenzähne werden anschließend durch Dampf oder heißes Wasser von Rückständen gereinigt.

Hierdurch kann sichergestellt werden, dass eventuell vorhandene Rückstände des Haltemittels, Wachses oder Fräswachses den Aufdruck der Prothesenbasis auf den Prothesenzähnen nicht beeinträchtigt. Ansonsten könnten Rückstände des Haltemittels zwischen der Prothesenbasis und den Prothesenzähnen verbleiben und dadurch die Dentalprothese an dieser Verbindung mechanisch schwächen.

Mit einer Weiterentwicklung des erfindungsgemäßen Verfahrens wird auch vorgeschlagen, dass zur Herstellung der physischen Okklusionsplatte aus der Lage und Orientierung der koronalen Seiten der virtuellen Prothesenzähne des virtuellen dreidimensionalen Dentalprothesen-Modells ein virtuelles Modell der Okklusionsplatte berechnet wird, so dass ein Bereich der virtuellen Oberfläche der virtuellen Okklusionsplatte durch ein Negativ der koronalen Seiten der virtuellen Prothesenzähne gebildet wird, wobei die Lage und die Orientierung der koronalen Seiten der virtuellen Prothesenzähne relativ zueinander entsprechend dem Dentalprothesenmodell in dem Negativ erhalten bleibt und die physische Okklusionsplatte mit einem CAM-Verfahren anhand der Daten des virtuellen Modells der Okklusionsplatte hergestellt wird.

Hierdurch kann eine Automatisierung der Herstellung der Okklusionsplatte und damit eine weitere Automatisierung des gesamten Herstellungsverfahrens erreicht werden.

Bevorzugt kann zudem vorgesehen sein, dass die Prothesenzähne vor Schritt C) zumindest bereichsweise basal angeraut und/oder zumindest bereichsweise mit einem Lösungsmittel angequollen werden, insbesondere nach einer Reinigung der Prothesenzähne und nach einer erneuten Befestigung der Prothesenzähne in der Okklusionsplatte.

Hierdurch wird erreicht, dass die Verbindung zwischen den Prothesenzähnen und der Prothesenbasis stabiler wird. Durch die zusätzliche Aufrauhung oder Anrauhung der Oberflächen kann das Lösungsmittel die Oberflächen schneller anlösen. Das Aufrauen oder Anrauhen der Oberfläche kann durch das Lösungsmittel geschehen. Zudem wird die effektive Oberfläche zum Verbinden über den Zement oder den Kleber vergrößert und damit der Halt der Prothesenzähne in der Prothesenbasis verbessert und dadurch die Haltbarkeit der Dentalprothese verbessert. Ferner kann erfindungsgemäß vorgesehen sein, dass die Prothesenzähne mit heißem Wasser oder Wasserdampf gereinigt werden, bevor die Prothesenbasis aufgedruckt wird. Durch das Anquellen mit einem Lösungsmittel, werden die basalen Enden der Prothesenzähne aufgeweicht und können sich anschließend leichter mit dem Harz durchmischen und chemisch verbinden.

Bei bevorzugten Verfahren kann auch vorgesehen sein, dass beim Befestigen der Okklusionsplatte in der Vorrichtung zum schichtweisen Aufbau von dreidimensionalen Kunststoffstrukturen in Schritt C) die Okklusionsplatte in eine Halterung auf einer Bauplattform der Vorrichtung zum schichtweisen Aufbau von dreidimensionalen Kunststoffstrukturen in einer eindeutig definierten Position befestigt wird, bevorzugt in einer eindeutig definierten Position eingerastet wird.

Damit wird eine einfache und unkomplizierte Bedienung und Durchführbarkeit des Verfahrens erreicht. Zudem sind so auch herkömmliche Vorrichtungen zum schichtweisen Aufbau von dreidimensionalen Kunststoffstrukturen oder 3D-Drucker oder Vorrichtungen zum schichtweisen Aufbau von dreidimensionalen Kunststoffstrukturen und 3D-Drucker, die zu weiteren beziehungsweise anderen Zwecken geeignet sind, gut zur Umsetzung des Verfahrens geeignet.

Gemäß einer bevorzugten Ausführung wird vorgeschlagen, dass das Aufdrucken der Prothesenbasis auf die Prothesenzähne schichtweise erfolgt.

Dieser schichtweise Aufbau ist besonders gut zum Aufdrucken der Prothesenbasis auf den Prothesenzähnen geeignet.

Dabei kann vorgesehen sein, dass die aufgedruckten Schichten der Prothesenbasis in einer Ebene parallel zur Okklusionsebene oder zur Transversalebene des zu erzeugenden Gebisses erfolgt.

Beginnend von der basalen Seite der ausgerichteten und gegebenenfalls gekürzten, aufgerauten und/oder mit einem Lösungsmittel angequollenen Prothesenzähne kann dann die Dentalprothese ohne großen Aufwand in einer Richtung senkrecht zur Okklusionsebene der Dentalprothese oder senkrecht zur Transversalebene des Patienten beziehungsweise der Dentalprothese gefertigt werden.

Ferner kann vorgesehen sein, dass das Aufdrucken durch Aushärten eines flüssigen aushärtbaren Harzes an einer Harzoberfläche eines Harzbads durchgeführt wird, wobei die basalen Enden der Prothesenzähne an die Harzoberfläche aufgelegt oder angelegt werden und/oder die basalen Enden der Prothesenzähne in das Harzbad eingetaucht werden.

Dabei können die basalen Enden der Prothesenzähne sowohl von außerhalb als auch von innerhalb des Harzbads an die Harzoberfläche angelegt werden oder die Harzoberfläche durchstoßen. Die Prothesenbasis kann bei dem schichtweisen Aufbau mit ihrer Längsachse nur parallel zur Harzoberfläche ausgerichtet sein, wenn eine einfache Durchführung des Verfahrens gewährleistet sein soll.

Bei der Verwendung eines Harzbads kann erfindungsgemäß vorgesehen sein, dass zum schichtweisen Aufbau die Prothesenzähne in dem Harzbad abgesenkt werden, wobei eine Belichtung des flüssigen Harzes zu dessen Aushärtung von oberhalb der Harzoberfläche erfolgt, oder die Prothesenzähne aus dem Harzbad angehoben werden, wobei eine Belichtung des flüssigen Harzes zu dessen Aushärtung von unterhalb der Harzoberfläche erfolgt.

Dabei wird das Anheben aus dem Harzbad favorisiert, da hierdurch gegebenenfalls ohne das Anbringen von zusätzlichen Stützstrukturen gearbeitet werden kann. Solche Stützstrukturen müssten nach der Herstellung der Dentalprothese ansonsten aufwendig entfernt werden.

Ferner können bei einem Aufbau durch Anheben aus dem Harzbad - der Aufbau der Prothesenbasis erfolgt dabei nach unten - an den Basalseiten der Prothesenzähne makromechanische Retentionen (Oberflächliche Rauigkeiten und Strukturen) angebracht werden, da bei dieser Anordnung die Auftragung der neuen Harzschicht nicht durch einen Wischer geglättet wird.

Des Weiteren kann erfindungsgemäß vorgesehen sein, dass nach Schritt D) die Dentalprothese aufweisend die ausgedruckte Prothesenbasis und die darin befestigten Prothesenzähne aus der Okklusionsplatte entnommen wird und anschließend eine Reinigung der Dentalprothese, eine Nachhärtung der Dentalprothese und/oder eine Politur der Prothesenbasis erfolgt.

Hierdurch werden eine hohe ästhetische Qualität und eine hohe Qualität des Produkts bezüglich der Anwendung als Dentalprothese erreicht. Durch eine besonders glatte Oberfläche kann die Dentalprothese vor Plaque-Anlagerungen geschützt werden und erhält ein besonders natürliches Aussehen.

Bei erfindungsgemäßen Verfahren kann vorgesehen sein, dass das virtuelle dreidimensionale Dentalprothesen-Modell rechnerisch mittels File-Splitting in ein dreidimensionales Modell der virtuellen Prothesenzähne und ein virtuelles dreidimensionales Modell der Prothesenbasis geteilt wird.

Dabei kann bevorzugt vorgesehen sein, dass bei der Teilung des virtuellen Dentalprothesen-Modells Aufnahmeflächen in das virtuelle Modell der Prothesenbasis gerechnet werden, insbesondere in einer Ebene parallel zur Okklusionsplatte oder Okklusionsebene oder zur Transversalebene angeordnete Aufnahmeflächen in das virtuelle Modell der Prothesenbasis gerechnet werden, die zu den basalen Seiten des virtuellen Modells der Prothesenzähne passen, so dass die Form des virtuellen Modells der Prothesenbasis flächenbündig mit der Form der basalen Seiten des virtuellen Modells der Prothesenzähne verbunden beziehungsweise aneinander gelegt werden kann.

Durch diese Maßnahmen wird erreicht, dass die mit Hilfe des virtuellen Modells auf die Prothesenzähne aufgedruckte Prothesenbasis zu den basalen Enden der Prothesenzähne passt und passend und flächenbündig und dadurch stabil auf die Prothesenzähne aufgedruckt werden kann und die Prothesenzähne und die Prothesenbasis dadurch stabiler ineinander befestigt werden können.

Ferner kann vorgesehen sein, dass das virtuelle dreidimensionale Dentalprothesen-Modell auf der Grundlage eines Intraoral-Scans zur Formgebung der virtuellen Prothesenbasis und durch eine virtuelle Aufstellung von virtuellen Modellen der vorkonfektionierten Prothesenzähne in der virtuellen Prothesenbasis erzeugt wird, wobei bevorzugt die Form, die Lage und/oder die Orientierung der Prothesenzähne durch eine Simulation der Lage der Dentalprothese im Mundraum des Patienten ausgewählt wird und wobei besonders bevorzugt die Okklusionsebene und/oder die Kaubewegungen des Mundraums simuliert werden.

Hierdurch wird eine weitere Automatisierung des Verfahrens erreicht. Da das virtuelle Modell des Dentalprothesen-Modells ohnehin genutzt wird, kann ein virtuelles Modell der Okklusionsplatte ohne sehr viel Zusatzaufwand ebenfalls berechnet werden. Daher ist eine derartige Erzeugung der Daten hierfür besonders vorteilhaft.

Bevorzugte Verfahren können sich auch dadurch auszeichnen, dass die vorkonfektionierten Prothesenzähne anhand des virtuellen Modells der Prothesenzähne mit einem CAM-Verfahren basal abgetragen werden, insbesondere abgefräst werden, so dass die basale Form der vorkonfektionierten Prothesenzähne derart an die virtuelle Prothesenbasis angepasst wird, dass die äußere Form der Prothesenbasis mit den eingesetzten Prothesenzähnen der äußeren Form des virtuellen Dentalprothesen-Modells entspricht.

Hierdurch kann auch die basale Kürzung der vorkonfektionierten Prothesenzähne mit Hilfe des virtuellen Modells erfolgen, so dass eine vollständigere Automatisierung des erfindungsgemäßen Verfahrens erreicht wird.

Des Weiteren kann vorgesehen sein, dass zur Berechnung des virtuellen Dentalprothesen-Modells Daten zur äußeren Form von bekannten vorkonfektionierten Prothesenzähnen verwendet werden.

Mit dieser Maßnahme kann ein Einscannen beziehungsweise Ausmessen der vorkonfektionierten Prothesenzähne vermieden werden und so eine weitere Vereinfachung des Verfahrens erreicht werden.

Schließlich kann auch vorgesehen sein, dass die an der Okklusionsplatte eingesetzten vorkonfektionierten Prothesenzähne mit der Okklusionsplatte mit Hilfe eines zu verfestigenden fluiden Fixierungsmittels, insbesondere eines Wachses oder eines Harzes, in einer Halterung fixiert werden und anschließend die Halterung in der Vorrichtung zum schichtweisen Aufbau von dreidimensionalen Kunststoffstrukturen fixiert wird, um die Prothesenbasis aufzudrucken, oder in einer computergesteuerten Fräse fixiert wird, um die Prothesenzähne anschließend basal abzutragen und/oder anzurauhen, wobei bevorzugt die basalen Seiten der vorkonfektionierten Prothesenzähne aus dem Fixierungsmittel herausragen.

Die Halterung kann eine einfache Form, wie ein Ring sein, in dem das Fixierungsmittel sich verfestigt oder verfestigt wird, um die vorkonfektionierten Prothesenzähne und die Okklusionsplatte zu fixieren. Der Ring benötigt eine Markierung, um eine eindeutige Richtung für die Lage der Prothesenzähne und/oder eine eindeutige Fixierung in der Fräsmaschine und/oder der Vorrichtung zum schichtweisen Aufbau von dreidimensionalen Kunststoffstrukturen zu gewährleisten. Die Markierung kann beispielsweise eine Nut oder ein Zapfen sein. Hierbei erfolgt auch eine Fixierung der vorkonfektionierten Prothesenzähne mit der Okklusionsplatte. Das Abtragen erfolgt durch Abfräsen der basalen Seiten der Prothesenzähne. Durch das Fixierungsmittel kann die Okklusionsplatte mit den vorkonfektionierten Prothesenzähnen in vorhandenen üblichen Formen beziehungsweise Halterungen beziehungsweise Fräshalterungen eingesetzt werden. Unabhängig von der Form der Okklusionsplatte und der Prothesenzähne können diese mit der Halterung verbunden werden, so dass ein Befestigen in einer Vorrichtung zum schichtweisen Aufbau von dreidimensionalen Kunststoffstrukturen möglich ist, beziehungsweise eine gemeinsame Bearbeitung der basalen Seiten der Prothesenzähne möglich ist.

Bei diesen Ausführungen kann vorgesehen sein, dass das Fixierungsmittel entfernt wird, nachdem die Prothesenzähne basal abgetragen wurden, wobei theoretisch die Prothesenzähne an der Okklusionsplatte befestigt bleiben können, wobei bevorzugt die Prothesenzähne von der Okklusionsplatte gelöst werden und wobei bevorzugt das Fixierungsmittel, das Wachs oder das Harz zur Entfernung des Fixierungsmittels, insbesondere des Wachses oder des Harzes geschmolzen und/oder ausgewaschen wird.

Mit der Erfindung wird auch vorgeschlagen, dass das Aufdrucken der Prothesenbasis auf die basalen Enden der Prothesenzähne schichtweise erfolgt, wobei die Dicke der Schichten immer gleich dick ist.

Aufgrund des Auftragens gleichmäßiger Schichtdicken wird die Berechnung der Daten für die Herstellung der Prothesenbasis im CAM-Verfahren vereinfacht und standardisiert.

Es kann erfindungsgemäß auch vorgesehen sein, dass das Aufdrucken der Prothesenbasis auf die basalen Enden der Prothesenzähne schichtweise erfolgt, wobei die Dicke der aufgedruckten Kunststoffstruktur jeder Schicht 1 µm bis 500 µm, bevorzugt 10 µm bis 200 µm, besonders bevorzugt 25 µm bis 100 µm beträgt.

Mit den angegebenen Schichtdicken kann ein schneller und präziser Aufbau der Prothesenbasis erreicht werden, ohne dass diese noch langwierig nachgearbeitet werden muss.

Die der vorliegenden Erfindung zugrundeliegenden Aufgaben werden auch gelöst durch eine Dentalprothese hergestellt mit einem solchen Verfahren.

Die der vorliegenden Erfindung zugrundeliegenden Aufgaben werden ferner gelöst durch eine Vorrichtung oder Kombination von Vorrichtungen zum Durchführen eines solchen Verfahrens, aufweisend eine Vorrichtung zum schichtweisen Aufbau von dreidimensionalen Kunststoffstrukturen und einen Computer zur Berechnung der virtuellen Modelle und zur Steuerung der CAM-Vorrichtung, bevorzugt zusätzlich aufweisend eine computergesteuerte Fräse.

Die der vorliegenden Erfindung zugrundeliegenden Aufgaben werden schließlich auch gelöst durch eine Okklusionsplatte hergestellt mit einem CAD/CAM-Verfahren zur Umsetzung eines solchen Verfahrens.

Die Prothesenzähne und/oder die Prothesenbasis bestehen bevorzugt aus einem Kunststoff, besonders bevorzugt bestehen die Prothesenzähne aus Polymethylmethacrylat (PMMA).

Die vorkonfektionierten Prothesenzähne können einzeln und/oder in mehreren Gruppen zusammenhängend oder als komplette Zahnreihen zusammenhängend vorliegen. Zusammenhängende Prothesenzähne sind fest miteinander verbunden.

Vorliegend wird im Rahmen der Erfindung der allgemein bekannte Begriff Rapid-Prototyping-Verfahren (RP-Verfahren) für ein Herstellungsverfahren verwendet, bei dem die Okklusionsplatte mit einem für Rapid-Prototyping üblichen Herstellungsverfahren hergestellt wird. Da es sich bei der Okklusionsplatte nicht um einen Prototypen, sondern um fertige oder halbfertige Bauteile handelt, könnte anstatt des Begriffs "Rapid-Prototyping-Verfahren" auch die in solchen Zusammenhängen gelegentlich gebrauchten Begriffe "Rapid Manufacturing", "generatives Fertigungsverfahren", "Rapid-Product-Development", "Advanced Digital Manufacturing" oder "E-Manufacturing" verwendet werden. Die Prothesenbasis wird bevorzugt aus einem rosafarbenen oder pinken Kunstharz gefertigt und die Prothesenzähne aus mehreren zahnfarbenen Kunststoffen.

Der Erfindung liegt die überraschende Erkenntnis zugrunde, dass die entsprechend eines dreidimensionalen Modells der Dentalprothese zueinander ausgerichteten Prothesenzähne direkt als Grundlage zum Aufdrucken der Prothesenbasis verwendet werden können. Dadurch kann auf die Verwendung eines Klebstoffs zur Verbindung der Prothesenbasis mit den Prothesenzähnen und auf den Vorgang des Einklebens vollständig verzichtet werden. Hierdurch entfallen der Aufwand der dafür notwendigen Verfahrensschritte und das Risiko möglicher Fehler beim Klebevorgang, die zu einer Beeinträchtigung der Qualität der Dentalprothese führen können. Da bei modernen Verfahren die Dentalprothese ohnehin generativ gefertigt wird, entsteht nur ein geringer Zusatzaufwand bei der ohnehin notwendigen Fertigung der Prothesenbasis. Dadurch wird mit der vorliegenden Erfindung ein Verfahren angegeben, dass bei Reduktion des Aufwands und der Kosten ein stabileres Ergebnis bezüglich der Dentalprothese liefert. Um eine mechanisch besonders stabile Dentalprothese zu erhalten, ist es sinnvoll, die Prothesenzähne zur stabileren Anbindung an das Material der Prothesenbasis, das auf die Prothesenzähne basal aufgedruckt wird, durch Anquellen mit einem Lösungsmittel und/oder durch Aufrauhen und/oder Reinigung vorzubereiten.

Mit der vorliegenden Erfindung wird ein Verfahren angegeben, mit dem vorkonfektionierte Prothesenzähne in einem Arbeitsschritt unter Verwendung der Daten eines Intraoral-Scans oder Scans des Gipsmodells eines unbezahnten oder teilbezahnten Kiefers und einer virtuellen Aufstellung und/oder Artikulation mit der Prothesenbasis verbunden werden können.

Im Folgenden werden Ausführungsbeispiele der Erfindung anhand von acht schematisch dargestellten Figuren erläutert, ohne jedoch dabei die Erfindung zu beschränken. Dabei zeigt:
Figur 1: eine perspektivische Ansicht eines CAD-Modells einer Prothesenbasis für einen Oberkiefer;
Figur 2: eine perspektivische Ansicht eines virtuellen CAD-Modells von Prothesenzähnen;
Figur 3: eine Aufsicht auf eine Okklusionsplatte zum Durchführen eines erfindungsgemäßen Verfahrens;
Figur 4: eine perspektivische Teilansicht der Okklusionsplatte nach Figur 3 mit angelegten / eingesetzten vorkonfektionierten Prothesenzähnen;
Figur 5: eine perspektivische Ansicht der mit Prothesenzähnen bestückten Okklusionsplatte nach Figur 4, die in eine Fräshalterung eingesetzt wurde;
Figur 6: eine perspektivische Ansicht der in Wachs beziehungsweise Fräswachs gegossenen, mit der Fräshalterung verbundenen und mit Prothesenzähnen bestückten Okklusionsplatte, wobei die Prothesenzähne basal gefräst werden;
Figur 7: das schichtweise Aufdrucken der Prothesenbasis auf die abgefrästen Prothesenzähne mit einem 3D-Drucker unter Verwendung eines mit Licht aushärtbaren flüssigen Harzes; und
Figur 8: ein beispielhaftes Ablaufdiagramm für ein erfindungsgemäßes Verfahren.

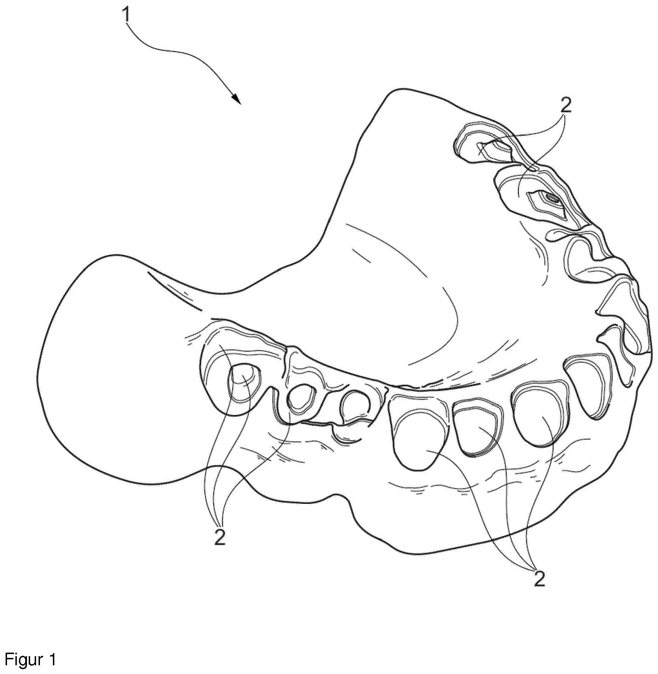

Figur 1 zeigt eine perspektivische Ansicht eines virtuellen CAD-Modells einer Prothesenbasis 1 zum Durchführen eines erfindungsgemäßen Verfahrens. In der Oberseite des virtuellen Modells der Prothesenbasis 1 sind eine Vielzahl von Flächen 2 (Aufnahmeflächen 2) zur Fixierung von Prothesenzähnen (in Figur 1 nicht gezeigt) vorgesehen. Eine physische Prothesenbasis 1 wird anhand des virtuellen CAD-Modells erzeugt, das mittels File-Splitting aus einem virtuellen Dentalprothesen-Modell, enthaltend die Daten zur Oberfläche der Prothesenbasis 1 und von virtuellen Prothesenzähnen, gewonnen wurde, wobei die physische Prothesenbasis 1 durch Aufdrucken der Prothesenbasis 1 auf die basalen Enden von aufgrund des Dentalprothesen-Modells ausgerichteten Prothesenzähnen erzeugt wird. Zur Herstellung der realen Prothesenbasis 1 wird das virtuelle CAD-Modell der Prothesenbasis 1 mit einem 3D-Drucker als Vorrichtung zum schichtweisen Aufbau von dreidimensionalen Kunststoffstrukturen auf die physischen Prothesenzähne ausgedruckt. Die so erzeugte physische Prothesenbasis 1 besteht dann aus einem rosafarben eingefärbten Kunststoff beziehungsweise aus einem rosafarben eingefärbten lichtgehärteten Kunstharz. Die Färbung und Transparenz wird passend zu einer Zahnfleischoptik gewählt. Der Einfachheit halber wird vorliegend bezüglich der Bezugszeichen nicht zwischen den physischen Teilen und den virtuellen Modellen unterschieden.

Das virtuelle Dentalprothesen-Modell wird erzeugt, indem zunächst ein Intraoral-Scan beim Patienten durchgeführt oder ein Scan eines Gipsmodells der Mundraumsituation des Patienten aufgenommen wird. Basierend auf diesen Daten erfolgt eine virtuelle Aufstellung der Prothesenzähne, wobei dabei bevorzugt auch die Artikulation des Kiefers des Patienten berücksichtigt wird. Dazu können virtuelle CAD-Modelle der zu verwendenden vorkonfektionierten Prothesenzähne verwendet werden, die in einer virtuellen Prothesenbasisgrundform aufgestellt werden.

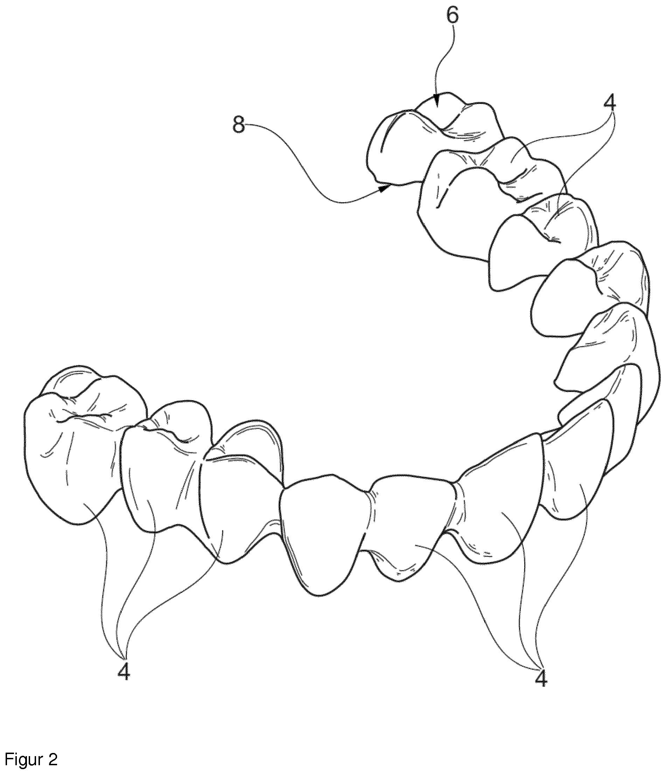

Figur 2 zeigt eine perspektivische Ansicht eines virtuellen CAD-Modells der zu erzeugenden beziehungsweise der gegeneinander auszurichtenden Prothesenzähne 4. Die in Figur 2 gezeigte Form entspricht der durch das File-Splitting verbleibenden Anteile des virtuellen Dentalprothesen-Modells, so dass das virtuelle Modell der Prothesenzähne 4 nach Figur 2 und das virtuelle Modell der Prothesenbasis 1 nach Figur 1 zusammengesetzt das virtuelle Dentalprothesen-Modell ergeben.

Es sei darauf hingewiesen, dass die realen Prothesenzähne 4 bevorzugt vereinzelt vorliegen und nicht miteinander verbunden sind, obwohl dies so in Figur 2 dargestellt ist. Das erfindungsgemäße Verfahren ist aber auch mit Zahnreihen von miteinander verbundenen Prothesenzähnen 4 durchführbar, die alle oder gruppenweise miteinander verbunden sind.

Die realen Prothesenzähne 4 bestehen aus einem harten weißen Kunststoff mit einer für Zähne oder zu den Zähnen des Patienten passenden Färbung und Transparenz. Jeder Prothesenzahn 4 weist eine koronale Oberfläche 6 (Kaufläche) und eine basale Oberfläche 8 auf. Auf die basale Oberfläche 8 wird später die Prothesenbasis 1 aufgedruckt, so dass die Flächen 2 zur Fixierung der Prothesenzähne 4 in der Prothesenbasis 1 auf den basalen Oberflächen 8 der Prothesenzähne 4 aufliegen. Die Flächen 2 passen dann zu den basalen Gegenstücken auf der basalen Seite 8 der Prothesenzähne 4, da die Prothesenbasis 1 direkt auf die basalen Oberflächen 8 der Prothesenzähne 4 aufgedruckt wird. Die basalen Seiten 8 der Prothesenzähne 4 werden erfindungsgemäß durch basales Abtragen, insbesondere durch Abschleifen oder Abfräsen, von vorkonfektionierten Prothesenzähnen erzeugt beziehungsweise bearbeitet.

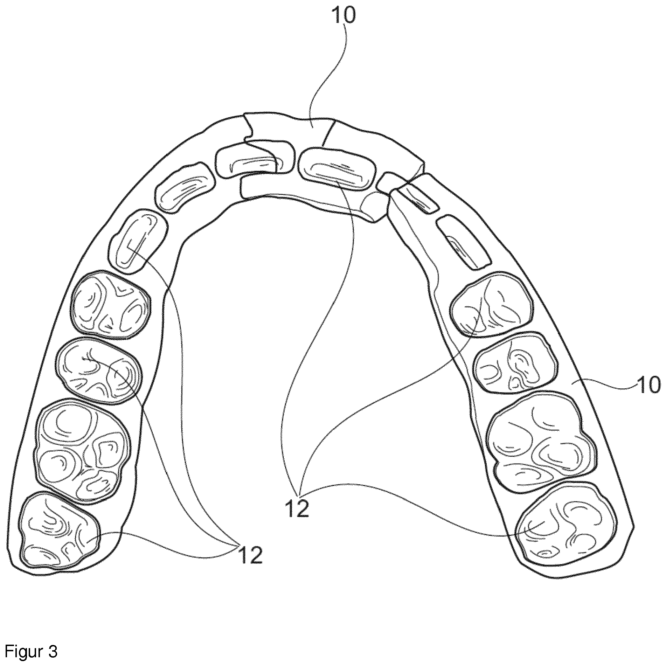

Für die Prothesenzahnreihe wird nun eine dünne Platte mit einem Okklusionsrelief, eine sogenannte Okklusionsplatte, mittels CAM-Verfahren (gefräst oder gedruckt) hergestellt, um die Prothesenzähne 4 exakt in dieser zuvor festgelegten räumlichen Anordnung leicht zu fixieren. Figur 3 zeigt eine perspektivische Aufsicht auf eine solche Okklusionsplatte 10 zum Durchführen eines erfindungsgemäßen Verfahrens. Die Okklusionsplatte 10 wird hergestellt, in dem die Form der Oberfläche aller koronalen Seiten 6 der Prothesenzähne 4 in der aus dem virtuellen Dentalprothesen-Modell oder dem virtuellen CAD-Modell der Prothesenzähne 4 nach Figur 2 vorliegenden Orientierung und Anordnung zueinander als CAD-Modell für eine Oberfläche der Okklusionsplatte 10 verwendet wird. Die anderen Oberflächen des CAD-Modells der Okklusionsplatte 10 können als Zahnbogenform mit ebener Unterseite und an die Höhe einer später zu verwendenden Fräshalterung angepassten Dicke oder nach Art einer Aufbissschiene leicht automatisch ergänzt werden. Optional kann die Okklusionsplatte 10 auch in mehrere Segmente unterteilt sein, welche über Verbindungselemente in einer vordefinierten Geometrie zusammen gefügt werden.

Das CAD-Modell der Okklusionsplatte 10 wird verwendet, um die reale, in Figur 3 gezeigte Okklusionsplatte 10 mit einem CAM-Verfahren, beispielsweise durch ein RP-Verfahren, aus Kunststoff herzustellen. Beispielsweise kann die Okklusionsplatte 10 mit dem gleichen 3D-Drucker hergestellt werden, mit dem auch die Prothesenbasis 1 auf die Prothesenzähne 4 aufgedruckt wird. Die in Figur 3 gezeigte Oberfläche der Okklusionsplatte 10 weist Aufnahmeflächen 12 in Form von Vertiefungen auf, die der koronalen Form der zu bearbeitenden vorkonfektionierten Prothesenzähne 4 entsprechen.

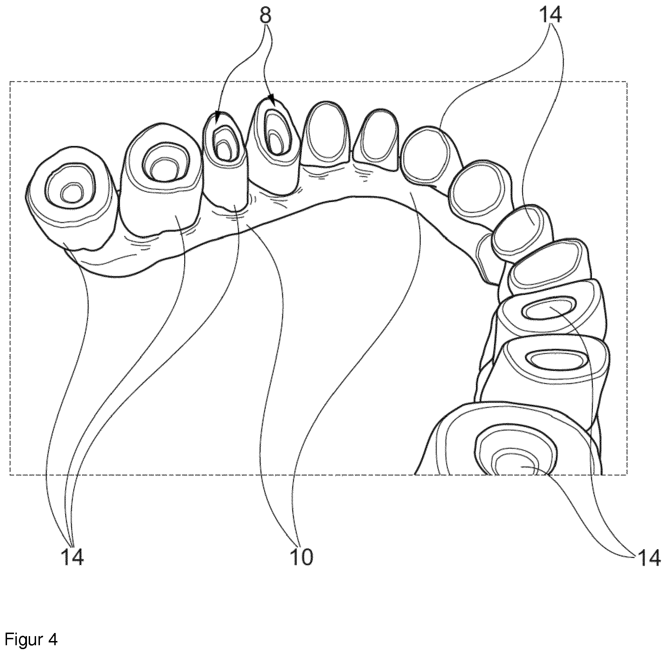

Figur 4 zeigt eine perspektivische Teilansicht der Okklusionsplatte 10 nach Figur 3 mit an den Aufnahmeflächen 12 angelegten beziehungsweise in den Aufnahmeflächen 12 eingesetzten Prothesenzähnen 14. Die vorkonfektionierten Prothesenzähne 14 werden mit der koronalen Seite an beziehungsweise in die jeweils passenden Aufnahmeflächen 12 der Okklusionsplatte 10 gesetzt. Die basalen Seiten 8 der vorkonfektionierten Prothesenzähne 14 sind dann frei zugänglich. Idealerweise und erfindungsgemäß besonders bevorzugt wird die Form der Aufnahmeflächen 12 der Okklusionsplatte 10 so erzeugt, dass die eingesetzten vorkonfektionierten Prothesenzähne 14 mit ihren koronalen Seiten in Presspassung in der Okklusionsplatte 10 stecken. Die vorkonfektionierten Prothesenzähne 14 können dann nicht mehr ohne weiteres aus der Okklusionsplatte 10 herausfallen. Alternativ oder zusätzlich ist es jedoch auch möglich, einen Haftvermittler zwischen die vorkonfektionierten Prothesenzähne 14 und die Aufnahmeflächen 12 einzubringen beziehungsweise auf den vorkonfektionierten Prothesenzähnen 14 und/oder den Aufnahmeflächen 12 aufzutragen. Die vorkonfektionierten Prothesenzähne 14 müssen in diesem Arbeitsschritt aber auch beim Einsetzen noch nicht fixiert werden.

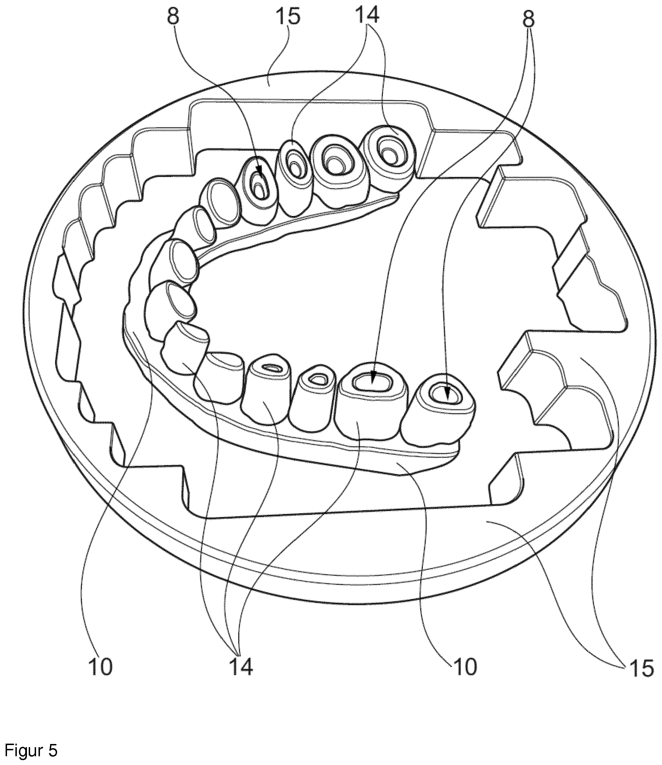

Figur 5 zeigt eine perspektivische Ansicht der mit vorkonfektionierten Prothesenzähnen 14 bestückten Okklusionsplatte 10 nach Figur 4, die in eine Fräshalterung 15 eingesetzt wurde. Die Anordnung aus Okklusionsplatte 10 und vorkonfektionierten Prothesenzähnen 14 wird also in die Fräshalterung 15 für eine Fräsmaschine gestellt. Dabei können kleine Aussparungen der Fräshalterung 15 mit den entsprechenden Gegenstücken in der Okklusionsplatte 10 helfen, die Okklusionsplatte 10 exakt in der Fräshalterung 15 zu positionieren. Solche Aussparungen sind aber nicht notwendig, das heißt, die innere Struktur der Fräshalterung 15, wie in Figur 5 gezeigt, ist zur Umsetzung erfindungsgemäßer Verfahren nicht notwendig.

Diese Fräshalterung 15 wird durch einen Kunststoffring mit bekannten Außenabmessungen gebildet. Im Inneren des Rings ist vorliegend ein Profil vorgesehen, das der besseren Fixierung und Orientierung der Okklusionsplatte 10 in der Fräshalterung 15 dient.

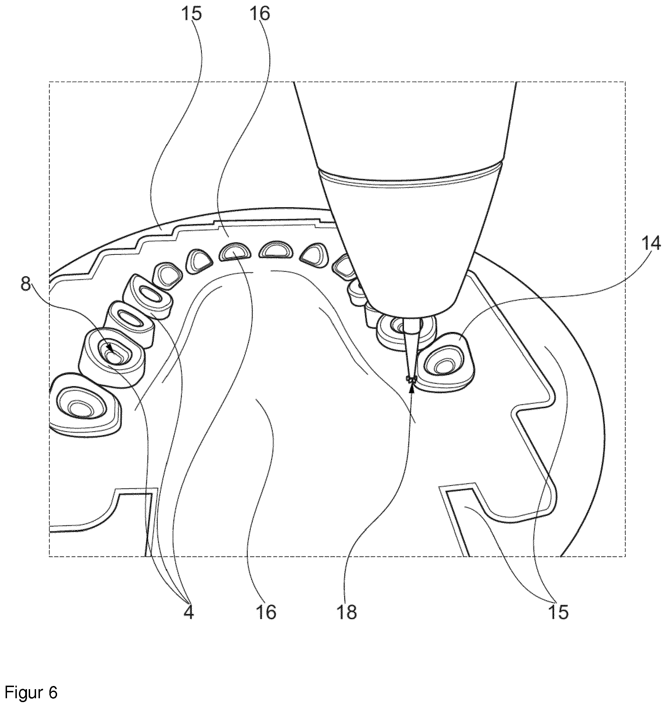

Der noch vorhandene Freiraum zwischen Okklusionsplatte 10, Fräshalterung 15 und vorkonfektionierten Prothesenzähnen 14 wird anschließend mit einem Wachs 16 beziehungsweise mit einem Fräswachs 16 bis zum Halsbereich der Prothesenzähne 14 ausgegossen. Das Wachs 16 härtet aus und fixiert die Okklusionsplatte 10 und die vorkonfektionierten Prothesenzähne 14 in der Fräshalterung 15. Die Fräshalterung 15 wird anschließend in eine computergesteuerte 4-Achs- oder 5-Achsfräse eingespannt und die vorkonfektionierten Prothesenzähne 14 werden nach Maßgabe des in Figur 2 gezeigten virtuellen Modells der zu kürzenden Prothesenzähne 4 basal vollautomatisch abgefräst. Bevorzugt werden dabei die basalen Seiten 8 der Prothesenzähne 4 alle derart gekürzt, dass alle Basalflächen in einer Ebene liegen (anders als in den Figuren 5 und 6 dargestellt), besonders bevorzugt dass alle Basalflächen mit einer Genauigkeit von mindestens 1 mm in einer Ebene liegen, ganz besonders bevorzugt mit einer Genauigkeit von mindestens 0,1 mm in einer Ebene liegen. Zum Abfräsen weist die Fräshalterung 15 eine Markierung zur Orientierung der Okklusionsplatte 10 und zum Einsetzen in die FräsMaschine auf, da ansonsten eine Zuordnung der Prothesenzähne 14 in der FräsMaschine nicht ohne weiteres möglich ist. Es kann dementsprechend auch vorgesehen sein, dass eine Nut oder ein Sackloch als Markierung an der Außenfläche eingesetzt wird, um eine Bestimmung der Lage und der Orientierung der Prothesenzähne 4 in der Vorrichtung zum schichtweisen Aufbau von dreidimensionalen Kunststoffstrukturen beziehungsweise dem 3D-Drucker zu ermöglichen.

Diese Situation ist in Figur 6 gezeigt, in der eine perspektivische Ansicht der in Wachs 16 gegossenen, mit der Fräshalterung 15 verbundenen und mit Prothesenzähnen 4, 14 bestückten Okklusionsplatte 10 dargestellt ist, wobei die vorkonfektionierten Prothesenzähne 14 basal gefräst werden oder die Prothesenzähne 4 schon basal abgefräst sind. Nachdem die Prothesenzähne 4 mit der gewünschten Form aus den vorkonfektionierten Prothesenzähnen 14 hergestellt wurden, kann die Prothesenbasis 1 auf die Prothesenzähne 4 zur Bildung einer Dentalprothese aufgedruckt werden. Bevorzugt werden jedoch zunächst die abgeschliffenen Prothesenzähne 4 von dem Wachs 16 befreit, von der Halterung 15 und von der Okklusionsplatte 10 gelöst sowie anschließend gereinigt, um Rückstände von der Oberfläche der Prothesenzähne 4 zu befreien. Die Entfernung der Wachsrückstände kann beispielsweise durch Abwaschen mit heißem Wasser oder mit Wasserdampf geschehen. Alternativ können die Prothesenzähne 4 dabei in der Okklusionsplatte 10 verbleiben. Die gereinigten Prothesenzähne 4 werden danach wieder in die Okklusionsplatte 10 eingesetzt und in einer Halterung eines 3D-Druckers befestigt.

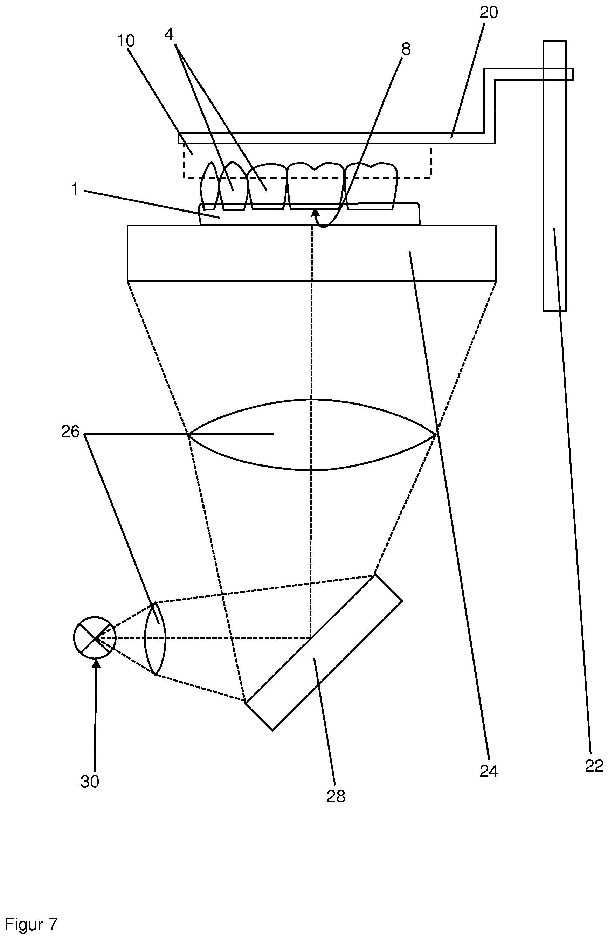

Diese Situation ist in Figur 7 gezeigt, in der dargestellt ist, dass die Prothesenzähne 4 in der Okklusionsplatte 10 an einer Bauplattform 20 eines 3D-Druckers befestigt sind. Dazu kann die Okklusionsplatte 10 in eine Rastung (nicht gezeigt) an der Bauplattform 20 greifen und mit dieser rasten. Die Bauplattform 20 ist mit Hilfe eines von dem 3D-Drucker gesteuerten Antriebsmotors 22 in Richtung einer Z-Achse senkrecht zur Okklusionsplatte 10 (in Figur 7 von oben nach unten) beweglich. Unterhalb der Bauplattform 20 und der Okklusionsplatte 10 mit den Prothesenzähnen 4, deren basale Seiten 8 sich alle in einer Ebene befinden, ist ein nach oben offenes Becken mit einem flüssigen Harz 24 angeordnet. Das flüssige Harz 24 kann mit Hilfe von Licht ausgehärtet werden. Der Boden des Harzbeckens ist transparent, so dass das flüssige Harz 24 von unten beleuchtet werden kann. Die Okklusionsplatte 10 ist in Figur 7 durch ein lang gestricheltes Rechteck transparent dargestellt, um die Position der Prothesenzähne 4 in der Okklusionsplatte 10 zu verdeutlichen. Zu Beginn des Aufdruckens werden die Prothesenzähne 4 mit der basalen Seite einige Millimeter, bis hin zu etwa 20 Millimeter - je nach Länge der Prothesenzähne 4 -, in das Harzbad 24 beziehungsweise das flüssige Harz 24 eingetaucht.

Zur besseren Verbindung der Prothesenzähne 4 mit dem aushärtenden flüssigen Harz 24, kann zuvor die Oberfläche, insbesondere die basale Oberfläche 8 der Prothesenzähne 4 durch Aufrauhen und/oder Anquellen mit einem Lösungsmittel vorbereitet werden. Die Prothesenzähne 4 werden dazu an der basalen Seite 8 aufgeraut (beispielsweise mechanisch durch Sandstrahlen oder chemisch mit einem geeigneten Lösungsmittel) und/oder mit einer Flüssigkeit, die Methylmethacrylat (MMA) enthält, angequollen. Als MMA-haltige Flüssigkeit kann beispielsweise Palabond® der Firma Heraeus Kulzer GmbH verwendet werden.

Die Okklusionsplatte 10 mit den Prothesenzähnen 4 ist in eine dafür vorgesehene Halterung auf der Bauplattform 20 des 3D-Druckers in einer eindeutig definierten Position eingerastet. Anschließend kann anhand des CAD-Modells der Prothesenbasis 1 die physische Prothesenbasis 1 schichtweise aufgebaut werden.

Für den schichtweisen Aufbau auf den basal eingeebneten Prothesenzähnen 4 wird die Prothesenbasis 1 - im Gegensatz zu Verfahren mit separater Herstellung der Prothesenbasis 1 - bevorzugt mit ihrer Längsachse nur parallel zur Harzoberfläche ausgerichtet, wie in Figur 7 dargestellt.

Von den beiden daraus folgenden Orientierungsmöglichkeiten:
1. Absenken der angeordneten Prothesenzähne 4 beziehungsweise der Bauplattform 20 im Harzbad 24 und belichten der Harzschicht von oben oder
2. Anheben der angeordneten Prothesenzähne 4 beziehungsweise der Bauplattform 20 aus dem Harzbad 24 und belichten von unten durch den Wannenboden,
wird das Anheben aus dem Harzbad 24 favorisiert (wie in Figur 7 dargestellt), da hierdurch gegebenenfalls ohne das Anbringen von zusätzlichen Stützstrukturen gearbeitet werden kann.
F erner können bei einem Aufbau nach unten an den Basalseiten 8 der Prothesenzähne 4 makromechanische Retentionen angebracht werden, da bei dieser Anordnung die Auftragung der neuen Harzschicht nicht durch einen Wischer geglättet wird.

Die Beleuchtung erfolgt über ein System aus Linsen 26 und einem Mikrospiegel-Array 28 und einer Lichtquelle 30. Als Mikrospiegel-Array 28 beziehungsweise "Digital Micromirror Device" (DMD) kann beispielsweise eine Vorrichtung zum "Digital Light Processing®" (DLP) der Firma Texas Instruments verwendet werden. Mit der Beleuchtung wird das Harz 24 an den basalen Seiten 8 der Prothesenzähne 4 ausgehärtet und haftet dort an. Schichtweise wird die Prothesenbasis 1 darauf aufgebaut und wie bei bekannten 3D-Druckprozessen üblich die Prothesenbasis 1 aufgedruckt.

Nach dem Ende des Druckprozesses kann die Dentalprothese aus der Okklusionsplatte 10 entnommen und nachgehärtet ("postcuring") werden. Reste der Harzmischung auf der Prothesenoberfläche werden durch Reinigen in Ethanol oder Isopropanol im Ultraschallbecken entfernt. Eine Politur der Prothesenbasis 1 glättet die Oberfläche, schützt diese vor Plaque-Anlagerungen und verleiht der Dentalprothese ein ästhetisches Aussehen.

Das erfindungsgemäße Verfahren kann mit manuell oder mittels Rapid-Prototyping-Verfahren hergestellten Okklusionsplatten 10 durchgeführt werden. Ebenso kann das Verfahren alternativ auch auf gedruckte Prothesenzähne 4 oder Prothesenzahnreihen 4 angewandt werden.

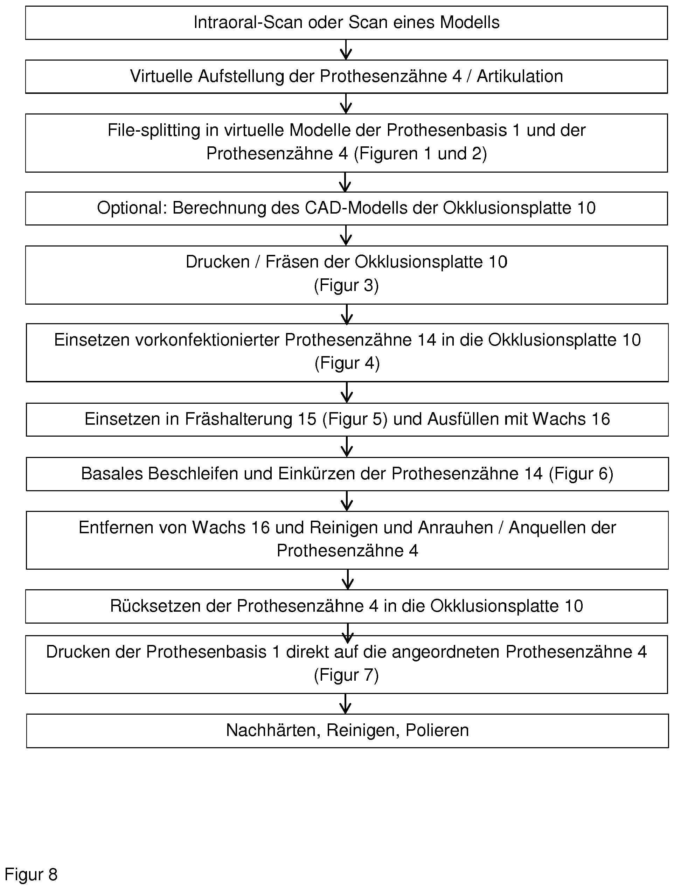

In Figur 8 wird ein beispielhaftes Ablaufdiagramm für ein erfindungsgemäßes Verfahren gezeigt.

### Bezugszeichenliste

- 1: Prothesenbasis
- 2: Fläche zur Fixierung von Prothesenzähnen
- 4: Prothesenzahn / Zahnreihe
- 6: Koronale Fläche / Koronale Seite des Prothesenzahns
- 8: Basale Fläche / Basale Seite des Prothesenzahns
- 10: Okklusionsplatte
- 12: Aufnahmeflächen für die koronalen Seiten der Prothesenzähne
- 14: Vorkonfektionierter Prothesenzahn
- 15: Fräshalterung
- 16: Wachs
- 18: Fräse
- 20: Bauplattform
- 22: Antriebsmotor
- 24: Flüssiges Harz / Harzbad
- 26: Linse
- 28: Mikrospiegel-Array
- 30: Lichtquelle

## Patentansprüche

1. Verfahren zur Herstellung einer Dentalprothese mit Hilfe eines Computers, wobei die Dentalprothese eine Prothesenbasis (1) und mehrere Prothesenzähne (4, 14) aufweist, wobei das Verfahren unter Anwendung eines virtuellen dreidimensionalen Dentalprothesen-Modells der zu erzeugenden Dentalprothese erfolgt und wobei das virtuelle dreidimensionale Dentalprothesen-Modell virtuelle Prothesenzähne und eine virtuelle Prothesenbasis aufweist, **gekennzeichnet durch** die folgenden chronologischen Schritte:
A) Herstellen einer physischen Okklusionsplatte (10), wobei ein Bereich der Oberfläche der Okklusionsplatte (10) durch ein Negativ der koronalen Seiten der virtuellen Prothesenzähne des virtuellen Dentalprothesen-Modells gebildet wird, wobei die Lage und die Orientierung der virtuellen Prothesenzähne relativ zueinander entsprechend dem virtuellen Dentalprothesen-Modell in der Form der Oberfläche der Okklusionsplatte (10) erhalten bleibt;
B) Anlegen und Befestigen von vorkonfektionierten Prothesenzähnen (4, 14) an der Okklusionsplatte (10), wobei die koronalen Seiten der vorkonfektionierten Prothesenzähne (4, 14) an die durch das Negativ geformte Oberfläche der Okklusionsplatte (10) angelegt werden;
C) Befestigen der Okklusionsplatte (10) mit den darin befestigten Prothesenzähnen (4, 14) in einer Vorrichtung zum schichtweisen Aufbau von dreidimensionalen Kunststoffstrukturen; und
D) Aufdrucken der Prothesenbasis (1) auf die basalen Enden (8) der Prothesenzähne (4, 14) mit der Vorrichtung zum schichtweisen Aufbau von dreidimensionalen Kunststoffstrukturen auf der Basis der Form der virtuellen Prothesenbasis.

2. Verfahren nach Anspruch 1, **dadurch gekennzeichnet, dass**
nach Schritt B) und vor Schritt D) ein basales Abtragen der an der Okklusionsplatte (10) befestigten vorkonfektionierten Prothesenzähne (4, 14) erfolgt, wobei die Prothesenzähne (4, 14) durch das basale Abtragen an die Form der virtuellen Prothesenzähne und/oder der virtuellen Prothesenbasis angepasst werden.

3. Verfahren nach Anspruch 2, **dadurch gekennzeichnet, dass**
die vorkonfektionierten Prothesenzähne (4, 14) basal so eingekürzt werden, dass die Basalflächen (8) aller Prothesenzähne (4, 14) in einer Ebene oder im Wesentlichen in einer Ebene liegen.

4. Verfahren nach Anspruch 2 oder 3, **dadurch gekennzeichnet, dass**
die basal eingekürzten Prothesenzähne (4, 14) aus der Okklusionsplatte (10) entfernt werden und von Rückständen befreit werden, bevorzugt von einem Haltemittel (16) zur Halterung der Prothesenzähne (4, 14) in der Okklusionsplatte (10) gereinigt werden, besonders bevorzugt von einem Wachs (16) oder von einem Fräswachs (16) gereinigt werden, wobei die Prothesenzähne (4, 14) vor Schritt C) wieder in der Okklusionsplatte (10) befestigt werden.

5. Verfahren nach einer der vorangehenden Ansprüche, **dadurch gekennzeichnet, dass**
zur Herstellung der physischen Okklusionsplatte (10) aus der Lage und Orientierung der koronalen Seiten (6) der virtuellen Prothesenzähne des virtuellen dreidimensionalen Dentalprothesen-Modells ein virtuelles Modell der Okklusionsplatte (10) berechnet wird, so dass ein Bereich der virtuellen Oberfläche der virtuellen Okklusionsplatte (10) durch ein Negativ der koronalen Seiten (6) der virtuellen Prothesenzähne gebildet wird, wobei die Lage und die Orientierung der koronalen Seiten (6) der virtuellen Prothesenzähne relativ zueinander entsprechend dem Dentalprothesenmodell in dem Negativ erhalten bleibt und die physische Okklusionsplatte (10) mit einem CAM-Verfahren anhand der Daten des virtuellen Modells der Okklusionsplatte (10) hergestellt wird.

6. Verfahren nach einer der vorangehenden Ansprüche, **dadurch gekennzeichnet, dass**
die Prothesenzähne (4, 14) vor Schritt C) zumindest bereichsweise basal angeraut und/oder zumindest bereichsweise mit einem Lösungsmittel angequollen werden, insbesondere nach einer Reinigung der Prothesenzähne (4, 14) und nach einer erneuten Befestigung der Prothesenzähne (4, 14) in der Okklusionsplatte (10).

7. Verfahren nach einer der vorangehenden Ansprüche, **dadurch gekennzeichnet, dass**
beim Befestigen der Okklusionsplatte (10) in der Vorrichtung zum schichtweisen Aufbau von dreidimensionalen Kunststoffstrukturen in Schritt C) die Okklusionsplatte (10) in eine Halterung auf einer Bauplattform (20) der Vorrichtung zum schichtweisen Aufbau von dreidimensionalen Kunststoffstrukturen in einer eindeutig definierten Position befestigt wird, bevorzugt in einer eindeutig definierten Position eingerastet wird.

8. Verfahren nach einer der vorangehenden Ansprüche, **dadurch gekennzeichnet, dass**
das Aufdrucken der Prothesenbasis (1) auf die Prothesenzähne (4, 14) schichtweise erfolgt.

9. Verfahren nach Anspruch 8, **dadurch gekennzeichnet, dass**
die aufgedruckten Schichten der Prothesenbasis (1) in einer Ebene parallel zur Okklusionsebene oder zur Transversalebene des zu erzeugenden Gebisses erfolgt.

10. Verfahren nach Anspruch 8 oder 9, **dadurch gekennzeichnet, dass**
das Aufdrucken durch Aushärten eines flüssigen aushärtbaren Harzes (24) an einer Harzoberfläche eines Harzbads (24) durchgeführt wird, wobei die basalen Enden (8) der Prothesenzähne (4, 14) an die Harzoberfläche aufgelegt oder angelegt werden und/oder die basalen Enden (8) der Prothesenzähne (4, 14) eingetaucht werden.

11. Verfahren nach Anspruch 10, **dadurch gekennzeichnet, dass** zum schichtweisen Aufbau die Prothesenzähne (4, 14) in dem Harzbad (24) abgesenkt werden, wobei eine Belichtung des flüssigen Harzes (24) zu dessen Aushärtung von oberhalb der Harzoberfläche erfolgt, oder die Prothesenzähne (4, 14) aus dem Harzbad (24) angehoben werden, wobei eine Belichtung des flüssigen Harzes (24) zu dessen Aushärtung von unterhalb der Harzoberfläche erfolgt.

12. Verfahren nach einer der vorangehenden Ansprüche, **dadurch gekennzeichnet, dass**
nach Schritt D) die Dentalprothese aufweisend die ausgedruckte Prothesenbasis (1) und die darin befestigten Prothesenzähne (4, 14) aus der Okklusionsplatte (10) entnommen wird und anschließend eine Reinigung der Dentalprothese, eine Nachhärtung der Dentalprothese und/oder eine Politur der Prothesenbasis (1) erfolgt.

13. Verfahren nach einer der vorangehenden Ansprüche, **dadurch gekennzeichnet, dass**
das virtuelle dreidimensionale Dentalprothesen-Modell rechnerisch mittels File-Splitting in ein dreidimensionales Modell der virtuellen Prothesenzähne und ein virtuelles dreidimensionales Modell der Prothesenbasis geteilt wird.

14. Verfahren nach einer der vorangehenden Ansprüche, **dadurch gekennzeichnet, dass**
das virtuelle dreidimensionale Dentalprothesen-Modell auf der Grundlage eines Intraoral-Scans zur Formgebung der virtuellen Prothesenbasis und durch eine virtuelle Aufstellung von virtuellen Modellen der vorkonfektionierten Prothesenzähne (4, 14) in der virtuellen Prothesenbasis erzeugt wird, wobei bevorzugt die Form, die Lage und/oder die Orientierung der Prothesenzähne (4, 14) durch eine Simulation der Lage der Dentalprothese im Mundraum des Patienten ausgewählt wird und wobei besonders bevorzugt die Okklusionsebene und/oder die Kaubewegungen des Mundraums simuliert werden.

15. Verfahren nach einem der vorangehenden Ansprüche, **dadurch gekennzeichnet, dass**
die vorkonfektionierten Prothesenzähne (4, 14) anhand des virtuellen Modells der Prothesenzähne (4, 14) mit einem CAM-Verfahren basal abgetragen werden, insbesondere abgefräst werden, so dass die basale Form der vorkonfektionierten Prothesenzähne (4, 14) derart an die virtuelle Prothesenbasis (1) angepasst wird, dass die äußere Form der Prothesenbasis (1) mit den eingesetzten Prothesenzähnen (4, 14) der äußeren Form des virtuellen Dentalprothesen-Modells entspricht.

16. Verfahren nach einem der vorangehenden Ansprüche, **dadurch gekennzeichnet, dass**
zur Berechnung des virtuellen Dentalprothesen-Modells Daten zur äußeren Form von bekannten vorkonfektionierten Prothesenzähnen (4, 14) verwendet werden.

17. Verfahren nach einem der vorangehenden Ansprüche, **dadurch gekennzeichnet, dass**
die an der Okklusionsplatte (10) eingesetzten vorkonfektionierten Prothesenzähne (4, 14) mit der Okklusionsplatte (10) mit Hilfe eines zu verfestigenden fluiden Fixierungsmittels (16), insbesondere eines Wachses (16) oder eines Harzes, in einer Halterung (15) fixiert werden und anschließend die Halterung (15) in der Vorrichtung zum schichtweisen Aufbau von dreidimensionalen Kunststoffstrukturen fixiert wird, um die Prothesenbasis (1) aufzudrucken, oder in einer computergesteuerten Fräse fixiert wird, um die Prothesenzähne (4, 14) anschließend basal abzutragen und/oder anzurauhen, wobei bevorzugt die basalen Seiten (8) der vorkonfektionierten Prothesenzähne (4, 14) aus dem Fixierungsmittel (16) herausragen.

18. Verfahren nach einem der vorangehenden Ansprüche, **dadurch gekennzeichnet, dass**
das Aufdrucken der Prothesenbasis (1) auf die basalen Enden (8) der Prothesenzähne (4, 14) schichtweise erfolgt, wobei die Dicke der Schichten immer gleich dick ist und/oder die Dicke der aufgedruckten Kunststoffstruktur jeder Schicht 1 µm bis 500 µm, bevorzugt 10 µm bis 200 µm, besonders bevorzugt 25 µm bis 100 µm beträgt.

19. Dentalprothese hergestellt mit einem Verfahren nach einem der Ansprüche 1 bis 18, bei der die Prothesenbasis (1) schichtweise auf die basalen Enden (8) der Prothesenzähne (4, 14) aufgedruckt ist.

20. Vorrichtung oder Kombination von Vorrichtungen zum Durchführen eines Verfahrens nach einem der Ansprüche 1 bis 18, aufweisend eine Vorrichtung zum schichtweisen Aufbau von dreidimensionalen Kunststoffstrukturen und einen Computer zur Berechnung der virtuellen Modelle und zur Steuerung der CAM-Vorrichtung nach einem der Ansprüche 1 bis 18.

21. Vorrichtung nach Anspruch 20, **dadurch gekennzeichnet, dass**
die Vorrichtung oder die Kombination von Vorrichtungen zusätzlich eine computergesteuerte Fräse aufweist.

## Claims

1. Method for producing a dental prosthesis with the aid of a computer, wherein the dental prosthesis comprises a prosthetic base (1) and a plurality of prosthetic teeth (4, 14), wherein the method is carried out with the use of a virtual three-dimensional dental prosthesis model of the dental prosthesis which is to be produced, and wherein the virtual three-dimensional dental prosthesis model comprises virtual prosthetic teeth and a virtual prosthetic base, **characterized by** the following chronological steps:
A) Production of a physical occlusion plate (10), wherein a region of the surface of the occlusion plate (10) is formed by a negative of the coronal sides of the virtual prosthetic teeth of the virtual dental prosthesis model, wherein the location and orientation of the virtual prosthetic teeth relative to one another corresponding to the virtual dental prosthesis model remain retained in the shape of the surface of the occlusion plate (10);
B) Placement and securing of preassembled prosthetic teeth (4, 14) on the occlusion plate (10), wherein the coronal sides of the preassembled prosthetic teeth (4, 14) are placed on the surface of the occlusion plate (10) formed by the negative;
C) Securing of the occlusion plate (10), with the prosthetic teeth (4, 14) secured therein, in a device for the layered forming of three-dimensional plastic structures; and
D) Printing the prosthetic base (1) onto the basal ends (8) of the prosthetic teeth (4, 14) with the device for the layered forming of three-dimensional plastic structures on the basis of the shape of the virtual prosthetic base.

2. Method according to Claim 1, **characterized in that**
after step B) and before step D) a basal ablation of the preassembled prosthetic teeth (4, 14) secured to the occlusion plate (10) is carried out, wherein the prosthetic teeth (4, 14) are adjusted by the basal ablation to the shape of the virtual prosthetic teeth and/or of the virtual prosthetic base.

3. Method according to Claim 2, **characterized in that**
the preassembled prosthetic teeth (4, 14) are basally shortened in such a way that the basal surfaces (8) of all the prosthetic teeth (4, 14) lie in one plane or essentially in one plane.

4. Method according to Claim 2 or 3, **characterized in that**
the basally shortened prosthetic teeth (4, 14) are removed from the occlusion plate (10) and freed of any residues, preferably cleaned of any retaining means (16) for retaining the prosthetic teeth (4, 14) in the occlusion plate (10), particularly preferably of a wax or a milling wax, wherein the prosthetic teeth (4, 14) are again secured in the occlusion plate before step C).

5. Method according to any one of the preceding claims, **characterized in that**, for producing the physical occlusion plate (10), a virtual model of the occlusion plate (10) is calculated from the position and orientation of the coronal sides (6) of the virtual prosthetic teeth of the virtual three-dimensional dental prosthesis model, such that a region of the virtual occlusion plate (10) is formed by a negative of the coronal sides (6) of the virtual prosthetic teeth, wherein the position and orientation of the coronal sides (6) of the virtual prosthetic teeth relative to one another corresponding to the dental prosthesis model remains retained in the negative, and the physical occlusion plate (10) is produced by a CAM process on the basis of the data of the virtual model of the occlusion plate (10).

6. Method according to any one of the preceding claims, **characterized in that**, before step C), the prosthetic teeth (4, 14) are basally roughened in at least some regions and/or in at least some regions are swelled with a solvent agent, in particular after a cleaning of the prosthetic teeth (4, 14) and after re-securing of the prosthetic teeth (4, 14) in the occlusion plate (10).

7. Method according to any one of the preceding claims, **characterized in that**, at the securing of the occlusion plate (10) in the device for the layered forming of three-dimensional plastic structures in step C), the occlusion plate (10) is secured in a holding element on a structuring platform (20) of the device for the layered forming of three-dimensional plastic structures, in a clearly defined position, preferably being latch-fitted into a clearly defined position.

8. Method according to any one of the preceding claims, **characterized in that** the printing of the prosthetic base (1) onto the prosthetic teeth (4, 14) takes place in layers.

9. Method according to Claim 8, **characterized in that**
the printed-on layers of the prosthetic base (1) are applied in a plane parallel to the occlusion plane or to the transversal plane of the denture which is to be produced.

10. Method according to Claim 8 or 9, **characterized in that**
the printing is carried out by the curing of a liquid curable resin (24) on a resin surface of a resin bath (24), wherein the basal ends (8) of the prosthetic teeth (4, 14) are laid on or at the resin surface and/or the basal ends (8) of the prosthetic teeth (4, 14) are immersed into the resin bath.

11. Method according to Claim 10, **characterized in that**
for the layered forming, the prosthetic teeth (4, 14) are sunk in the resin bath (24), wherein an illumination of the liquid resin (24) for the purpose of curing is applied from above the resin surface, or the prosthetic teeth (4, 14) are raised out of the resin bath (24), wherein an illumination of the liquid resin (24) for the purpose of curing takes place from below the resin surface.

12. Method according to any one of the preceding claims, **characterized in that**, after step D), the dental prosthesis comprising the printed-on prosthetic base (1) and the prosthetic teeth (4, 14) secured therein is taken out of the occlusion plate (10), and then a cleaning takes place of the dental prosthesis, a postcuring of the dental prosthesis, and/or a polishing of the prosthetic base (1).

13. Method according to any one of the preceding claims, **characterized in that** the virtual three-dimensional dental prosthesis model is divided computationally by way of file-splitting into a three-dimensional model of the virtual prosthetic teeth and a virtual three-dimensional model of the prosthetic base.

14. Method according to any one of the preceding claims, **characterized in that** the virtual three-dimensional dental prosthesis model is produced on the basis of an intraoral scan for shaping the virtual prosthetic base and by a virtual setting of virtual models of the preassembled prosthetic teeth (4, 14) in the virtual prosthetic base, wherein preferably the shape, the location, and/or the orientation of the prosthetic teeth (4, 14) are selected by a simulation of the position of the dental prosthesis in the oral cavity of the patient, and wherein particularly preferably the occlusion plane and/or the chewing movements of the oral cavity are simulated.

15. Method according to any one of the preceding claims, **characterized in that** the preassembled prosthetic teeth (4, 14) are basally ablated on the basis of the virtual model of the prosthetic teeth (4, 14) with a CAM method, in particular by milling, such that the basal shape of the preassembled prosthetic teeth (4, 14) is adjusted to the virtual prosthetic base (1) in such a way that the outer shape of the prosthetic base (1) with the prosthetic teeth (4, 14) fitted corresponds to the outer shape of the virtual dental prosthesis model.

16. Method according to any one of the preceding claims, **characterized in that**, for the calculation of the virtual dental prosthesis model, data relating to the outer shape of known preassembled prosthetic teeth (4, 14) is used.

17. Method according to any one of the preceding claims, **characterized in that** the preassembled prosthetic teeth (4, 14) fitted to the occlusion plate (10) are fixed with the aid of a fluid fixing means (16) which is to be hardened, in particular a wax (16) or a resin, in a holding element (15), and the holding element (15) is then fixed in the device for the layered forming of three-dimensional plastic structures or in a computer-controlled milling device in order to print on the prosthetic base, in order for the prosthetic teeth (4, 14) then to be ablated basally and/or roughed, wherein preferably the basal sides (8) of the preassembled prosthetic teeth (4, 14) project out of the fixing means.

18. Method according to any one of the preceding claims, **characterized in that** the printing of the prosthetic base (1) onto the basal ends (8) of the prosthetic teeth (4, 14) takes place layer by layer, wherein the thickness of the layers is always the same thickness and/or the thickness of the printed-on plastic structure measures for each layer 1 µm to 500 µm, preferably 10 µm to 200 µm, and particularly preferably 25 µm to 100 µm.

19. Dental prosthesis produced with a method according to one of Claims 1 to 18, in which the prosthetic base (1) is printed in layers on the basal ends (8) of the prosthetic teeth (4, 14).

20. Device or combination of devices for carrying out a method according to one of Claims 1 to 18, comprising a device for the layered forming of three-dimensional plastic structures and a computer for the calculation of the virtual model and to control the CAM device according to any one of claims 1 to 18.

21. Device according to claim 20, **characterized in that**
the device or the combination of devices additionally comprising a computer-controlled milling device.

## Revendications

1. Procédé de fabrication d'une prothèse dentaire à l'aide d'un ordinateur, dans lequel la prothèse dentaire présente une base de prothèse (1) et plusieurs dents prothétiques (4, 14), où le procédé a lieu moyennant l'emploi d'un modèle de prothèse dentaire tridimensionnel virtuel de la prothèse dentaire à créer et où le modèle de prothèse dentaire tridimensionnel virtuel présente des dents prothétiques virtuelles et une base de prothèse virtuelle, **caractérisé par** les étapes chronologiques suivantes :
A) de fabrication d'une plaque d'occlusion (10) physique, où une zone de la surface de la plaque d'occlusion (10) est formée par un négatif des faces coronales des dents prothétiques virtuelles du modèle de prothèse dentaire virtuel, où la position et l'orientation des dents prothétiques virtuelles les unes par rapport aux autres restent conservées dans la forme de la surface de la plaque d'occlusion (10) de manière correspondante au modèle de prothèse dentaire virtuel ;
B) d'application et de fixation de dents prothétiques (4, 14) préconfectionnées sur la plaque d'occlusion (10), où les faces coronales des dents prothétiques (4, 14) préconfectionnées sont appliquées sur la surface de la plaque d'occlusion (10) formée par le négatif ;
C) de fixation de la plaque d'occlusion (10) avec les dents prothétiques (4, 14) qui y sont fixées dans un dispositif permettant la construction couche par couche de structures synthétiques tridimensionnelles ; et
D) d'apport de la base de prothèse (1) par impression sur les extrémités basales (8) des dents prothétiques (4, 14) avec le dispositif permettant la construction couche par couche de structures synthétiques tridimensionnelles sur la base de la forme de la base de prothèse virtuelle.

2. Procédé selon la revendication 1, **caractérisé en ce**
**qu'**après l'étape B) et avant l'étape D), il y a un retrait à la base des dents prothétiques (4, 14) préconfectionnées fixées sur la plaque d'occlusion (10), où le retrait à la base est adapté à la forme des dents prothétiques virtuelles et/ou de la base de prothèse virtuelle.

3. Procédé selon la revendication 2, **caractérisé en ce que**
les dents prothétiques (4, 14) préconfectionnées sont raccourcies à la base de manière à ce que les surfaces basales (8) de toutes les dents prothétiques (4, 14) se situent dans un plan ou essentiellement dans un plan.

4. Procédé selon la revendication 2 ou la revendication 3, **caractérisé en ce que**
les dents prothétiques (4, 14) raccourcies à la base sont enlevées de la plaque d'occlusion (10) et sont libérées de résidus, sont de préférence nettoyées par un produit d'entretien (16) pour l'entretien des dents prothétiques (4, 14) dans la plaque d'occlusion (10), sont, de manière particulièrement préférée, débarrassées d'une cire (16) ou d'une cire de fraisage (16), où les dents prothétiques (4,14) sont de nouveau fixées dans la plaque d'occlusion (10) avant l'étape C).

5. Procédé selon l'une des revendications précédentes, **caractérisé en ce que**,
pour la fabrication de la plaque d'occlusion (10) physique, un modèle virtuel de la plaque d'occlusion (10) est calculé à partir de la position et de l'orientation des faces coronales (6) des dents prothétiques virtuelles du modèle de prothèse dentaire tridimensionnel virtuel, de sorte qu'une zone de la surface virtuelle de la plaque d'occlusion (10) virtuelle est formée par un négatif des faces coronales (6) des dents prothétiques virtuelles, où la position et l'orientation des faces coronales (6) des dents prothétiques virtuelles les unes par rapport aux autres restent conservées dans le négatif correspondant au modèle de prothèse dentaire et la plaque d'occlusion (10) physique est fabriquée avec un procédé FAO à l'aide des données du modèle virtuel de la plaque d'occlusion (10).

6. Procédé selon l'une des revendications précédentes, **caractérisé en ce que**
les dents prothétiques (4, 14) sont rendues rugueuses à la base au moins par endroits et/ou sont gélifiées avec un solvant au moins par endroits, notamment après un nettoyage des dents prothétiques (4, 14) et après une nouvelle fixation des dents prothétiques (4, 14) dans la plaque d'occlusion (10).

7. Procédé selon l'une des revendications précédentes, **caractérisé en ce que**,
lors de la fixation de la plaque d'occlusion (10) dans le dispositif permettant la construction couche par couche de structures synthétiques tridimensionnelles dans l'étape C), la plaque d'occlusion (10) est fixée dans un support sur une plateforme de construction (20) du dispositif permettant la construction couche par couche de structures synthétiques tridimensionnelles dans une position définie précise, est de préférence verrouillée dans une position définie précisément.

8. Procédé selon l'une des revendications précédentes, **caractérisé en ce que**
**que** l'apport par impression de la base de prothèse (11) sur les dents prothétiques (4, 14) a lieu couche par couche.

9. Procédé selon la revendication 8, **caractérisé en ce que**
les couches rapportées par impression de la base de prothèse (1) ont lieu dans un plan parallèle au plan d'occlusion ou au plan transversal de l'appareil dentaire à créer.

10. Procédé selon la revendication 8 ou la revendication 9, **caractérisé en ce que**
l'apport par impression est effectué par un durcissement d'une résine (24) liquide durcissable sur une surface de résine d'un bain de résine (24), où les extrémités (8) basales (8) des dents prothétiques (4, 14) sont déposées ou appliquées sur la surface de résine et/ou les extrémités basales (8) des dents prothétiques (4, 14) y sont immergées.

11. Procédé selon la revendication 10, **caractérisé en ce que**,
pour la construction couche par couche, les dents prothétiques (4, 14) sont descendues dans le bain de résine (24), où un éclairage de la résine liquide (24) pour son durcissement a lieu au-dessus de la surface de résine, ou les dents prothétiques (4, 14) sont soulevées hors du bain de résine (24), où un éclairage de la résine liquide (24) pour son durcissement a lieu en-dessous de la surface de résine.

12. Procédé selon l'une des revendications précédentes, **caractérisé en ce**
**qu'**après l'étape D), la prothèse dentaire présentant la base de prothèse (1) créée par impression et les dents prothétiques (4, 14) fixées dedans est retirée de la plaque d'occlusion (10) et ensuite il y a un nettoyage de la prothèse dentaire, un nouveau durcissement de la prothèse dentaire, et/ou un polissage de la base de prothèse (1).

13. Procédé selon l'une des revendications précédentes, **caractérisé en ce que**
le modèle de prothèse dentaire tridimensionnel virtuel est divisé par calcul au moyen d'une division de fichiers dans un modèle tridimensionnel des dents prothétiques virtuelles et un modèle tridimensionnel virtuel de la base de prothèse.

14. Procédé selon l'une des revendications précédentes, **caractérisé en ce que**
le modèle de prothèse dentaire tridimensionnel virtuel est généré sur la base d'un balayage intra oral pour la mise en forme de la base de prothèse virtuelle et par une représentation virtuelle de modèles virtuels des dents prothétiques (4, 14) préconfectionnées dans la base de prothèse virtuelle, où de préférence la forme, la position et/ou l'orientation des dents prothétiques (4, 14) est choisie par une simulation de la position de la prothèse dentaire dans la cavité buccale du patient et où, de manière particulièrement préférée, le plan d'occlusion et/ou les mouvements de mâchage de la cavité buccale sont simulés.

15. Procédé selon l'une des revendications précédentes, **caractérisé en ce que**
les dents prothétiques (4, 14) préconfectionnées sont rognées à la base, notamment sont fraisées, à l'aide du modèle virtuel des dents prothétiques (4, 14) avec un procédé FAO, de sorte que la forme basale des dents prothétiques (4, 14) préconfectionnées est reproduite de telle manière sur la base de prothèse (1) virtuelle que la forme extérieure de la base de prothèse (1) avec les dents prothétiques (4, 14) insérées correspond à la forme extérieure du modèle de prothèse dentaire virtuel.

16. Procédé selon l'une des revendications précédentes, **caractérisé en ce que**
pour le calcul du modèle de prothèse dentaire virtuel, des données sont employées pour la forme extérieure de dents prothétiques (4, 14) préconfectionnées connues.

17. Procédé selon l'une des revendications précédentes, **caractérisé en ce que**
les dents prothétiques (4, 14) préconfectionnées insérées dans la plaque d'occlusion (10) sont fixées dans un support (15) avec la plaque d'occlusion (10) à l'aide d'un produit de fixation (16) fluide durcissable, notamment une cire (16) ou une résine, et ensuite le support (15) est fixé dans le dispositif pour la construction couche par couche de structures synthétiques tridimensionnelles afin de rapporter par impression la base de prothèse (1) dessus, ou est fixé dans une fraise commandée par ordinateur afin d'ensuite rogner et/ou rendre rugueuses à la base les dents prothétiques (4, 14), où, de préférence, les faces basales (8) des dents prothétiques (4, 14) préconfectionnées dépassent du produit de fixation (16).

18. Procédé selon l'une des revendications précédentes, **caractérisé en ce que** l'apport par impression de la base de prothèse (1) sur les extrémités basales (8) des dents prothétiques (4, 14) a lieu couche par couche, où l'épaisseur des couches est toujours la même et/ou l'épaisseur de la structure synthétique rapportée par impression dessus de chaque couche est de 1 µm à 500 µm, de préférence de 10 µm à 200 µm, de manière particulièrement préférée de 25 µm à 100 µm.

19. Prothèse dentaire fabriquée avec un procédé selon l'une des revendications 1 à 18, chez lequel la base de prothèse (1) est rapportée par une impression couche par couche sur les extrémités basales (8) des dents prothétiques (4, 14).

20. Dispositif ou combinaison de dispositifs permettant l'exécution d'un procédé selon l'une des revendications 1 à 18, présentant un dispositif permettant la construction couche par couche de structures synthétiques tridimensionnelles et un ordinateur permettant le calcul des modèles virtuels et la commande du dispositif de FAO selon l'une des revendications 1 à 18.

21. Dispositif selon la revendication 20, **caractérisé en ce que**
le dispositif ou la combinaison de dispositifs présente en outre une fraise commandée par ordinateur.
